# EUROPEAN PATENT SPECIFICATION

(11) **EP 2 124 584 B1**
(45) Date of publication and mention of the grant of the patent: **14.07.2010**
(21) Application number: 08717216.9
(22) Date of filing: 28.02.2008
(51) Int. Cl.: A23C 9/12, A23C 9/123, A23C 9/13, A23C 9/133, A23C 11/10, A23L 1/30, A23L 1/304

(54) **METHOD OF MANUFACTURING A CULTURED EDIBLE PRODUCT COMPRISING OMEGA-3 POLYUNSATURATED FATTY ACIDS AND IRON**
VERFAHREN ZUR HERSTELLUNG EINES ESSBAREN KULTURPRODUKTS MIT MEHRFACH UNGESÄTTIGTEN OMEGA-3-FETTSÄUREN UND EISEN
PROCEDE DE FABRICATION D'UN PRODUIT COMESTIBLE CULTIVE COMPOSE D'ACIDES GRAS POLYINSATURES OMEGA-3 ET DE FER

(30) Priority: 20.03.2007 EP 07104477
(43) Date of publication of application: 02.12.2009
(73) Proprietor: Unilever N.V., 3013 AL Rotterdam (NL); Unilever PLC, London EC4Y 0DY (GB)
(72) Inventor: AVRAMIS, Constantina, Avramopoulou, NL-3133 AT Vlaardingen (NL); JACOBS, Barbara, NL-3133 AT Vlaardingen (NL)
(74) Representative: Corsten, Michael Allan
(86) International application number: PCT/EP2008/052422
(87) International publication number: WO 2008/113665

(56) References cited:
- EP-A- 0 809 939
- EP-A- 1 523 891
- WO-A-89/02223
- WO-A-2005/029978
- WO-A-2006/114840

## Description

### TECHNICAL FIELD OF THE INVENTION

The present invention relates a method of manufacturing edible products, such as drinks, spreads and desserts. In particular, the invention relates to a method of manufacturing cultured edible products containing a source of omega-3 polyunsaturated fatty acids (ω-3 PUFA), such as fish-oil, and a source of iron.

### BACKGROUND OF THE INVENTION

The incorporation of bacteria in food products, and in particular dairy products, has been described in the literature. For instance EP-A 0 111 020 describes the use of a specific combination of bacteria to produce a thick fermented milk product. EP-A 0 082 581 describes fermented milk products, e.g. yoghurt, comprising specific lactic acid bacteria, interconnected by threads of biopolymers.

Many scientific publications have been issued that strongly suggest that regular consumption of significant amounts of polyunsaturated fatty acids can deliver important health benefits. In recent years, ω-3 polyunsaturated fatty acids have gained particular attention. Hence, many efforts have been made by the industry to develop food products and nutritional preparations that contain appreciable amounts of omega-3 polyunsaturated fatty acids.

Edible products containing fish-oil often develop a fishy odour during storage. This off-flavour problem is associated with the oxidation of the unsaturated fatty acids contained in the fish oil, notably the ω-3 PUFA. Oxidation of these unsaturated fatty acids is accompanied by the formation of volatile, potent flavour molecules, such as unsaturated aldehydes. Flavour attributes associated with oxidation products of unsaturated fatty acids include "cardboard", "paint", "oily", "rancid", "metallic" and "fish". A fishy off-flavour note typically results from oxidation of ω-3 PUFA and is regarded as particularly objectionable in dairy products.

Attempts have been made in the prior art to prevent off-flavour problems associated with the incorporation of fish oil in dairy products. EP 809 939, for instance, discloses a yogurt product containing refined fish oil, wherein the yogurt contains specific sweeteners and is packed in an oxygen blocking hermetic package in order to prevent the development of a fishy smell.

Other product formats with fish-oil have also been proposed. WO 04/014151 discloses the combined use of encapsulated fish oil and citrus flavour in cereal based food products.

WO 02/094035 discloses frozen desserts, which may optionally be fortified with fat. Examples of suitable supplemental fats include fish-oil.

Iron is an essential trace element in animal and human nutrition. It is a component of heme in hemoglobin and of myoglobin, cytochromes and several enzymes. The main role of iron is its participation in the transport, storage and utilization of oxygen. Iron deficiency can cause a broad spectrum of biochemical abnormalities.

Iron deficiency was and remains a common nutritional problem not only in the developing world but also in the industrialized countries. Inadequate intake of dietary iron causes the high incidence of anemia which nutritional surveys have identified among children, adolescents and women. Furthermore there is increasingly convincing evidence to suggest that iron deficiency impairs psychomotor development and cognitive function.

Since the human body does not produce minerals, it is totally dependent on an external supply of iron, either nutritional or supplementary. The importance of adequate iron intake is recognized during the whole life of the human being. The recommended daily allowance for iron intake is from 10 to 20 mg per day, and is dependent on age and sex. Children, women up to the time of menopause, and expectant and nursing mothers are in the group with higher requirements of iron.

However, we have found that inclusion of an iron component in liquid products can have the drawback that they can result in storage instability of the product due to adverse interactions with oxidisable oil contained within the same liquid product, notably an oil containing polyunsaturated fatty acids. The oxidation of polyunsaturated fatty acids in a liquid product is greatly accelerated by the presence of an iron component and is accompanied by the generation of objectionable off-flavours.

It was the objective of the inventors to provide a cultured edible product containing ω-3 PUFA and a source of iron that can easily be manufactured and that does not develop an objectionable off-flavour when stored in a refrigerator for up to several weeks.

### SUMMARY OF THE INVENTION

It was found that the aforementioned objective can be realised by employing a manufacturing process in which the oil is added after at least some of the other ingredients of the edible product have been pre-blended, pasteurised or sterilised and fermented and wherein the iron source is added at a specific point in the process. More particularly, the present process comprises the steps of:
(1) providing a pre-mix containing the protein, the water and optionally further ingredients;
(2) pasteurising or sterilising the pre-mix;
(3) inoculating the pasteurised or sterilised pre-mix with a micro-organism to produce a fermented premix;
(4) addition of iron in step (1), (2) or (3)
(5) combining the oil and the fermented premix to produce an oil-containing emulsion;
(6) homogenising the oil-containing emulsion to produce an oil-in-water emulsion containing a finely dispersed oil phase; and
(7) packaging the homogenised emulsion.

It was observed by the inventors that whereas pasteurisation or sterilisation of a product base containing added ω-3 PUFA resulted in the immediate development of a pronounced fishy off-flavour and whereas addition of ω-3 PUFA prior to fermentation also produces a fishy off-flavour, addition of the ω-3 PUFA after fermentation of the pre-mix did not produce significant off-flavour. Also the iron should be added in the premix as adding the iron in the oil phase gave products with an unacceptable taste. Although in the present process the oil is not subjected to a pasteurisation or sterilisation treatment, the present method enables the production of a microbiologically stable edible product.

### DETAILED DESCRIPTION OF THE INVENTION

Accordingly, the present invention relates to a process for the preparation of a cultured edible product comprising:
(a) from 0.1 to 12 wt% of protein;
(b) from 0.05 to 30 wt% of non-encapsulated oil containing at least 0.01 % of ω3-polyunsaturated fatty acids by weight of the edible product;
(c) at least 60 wt%, preferably at least 70 wt%, of water;
(d) at least 10⁷ viable cells/ml of a micro-organism selected from the group consisting of *Bifidobacterium, Lactobacillus, Bacteroides, Streptococcus, Saccharomyces* and combinations thereof;
(e) from 0.001 to 0.025 wt% of iron
said process comprising:
(1) providing a pre-mix containing the protein, the water and optionally further ingredients;
(2) pasteurising or sterilising the pre-mix;
(3) inoculating the pasteurised or sterilised pre-mix with a micro-organism selected from the group consisting of *Bifidobacterium, Lactobacillus, Bacteroides, Streptococcus, Saccharomyces* and combinations thereof to produce a fermented pre-mix;
(4) addition of iron in step (1), (2) or (3)
(5) combining the non-encapsulated oil and the fermented premix to produce an oil-containing emulsion;
(6) homogenising the oil-containing emulsion to produce an oil-in-water emulsion containing a finely dispersed oil phase; and
(7) packaging the homogenised emulsion.

Suitable iron salts are selected from the group consisting of iron pyrophosphate, iron orthophosphate, iron fumarate, iron EDTA, iron sulphate, iron glycinate, and iron sorbate. Preferred iron salt are iron fumarate and iron pyrophosphate. Preferably the oxidation state of the iron is Fe(III), i.e. ferric salts.

The amount of iron is calculated on iron ion. This entails that for different kinds of iron salts different amounts are needed. The preferred amount of iron to be consumed is 10 to 20 mg/day. For compositions of the present invention at least 1 mg of iron per 100g serving is present, i.e. 0.001 wt% of iron. Preferably 1 mg to 25 mg iron per 100g serving (0.001 wt%-0.025 wt%) is present, more preferably 1.5 to 12 mg iron per 100g serving (0.0015-0.012 wt%), most preferably 3 to 6 mg iron per 100g serving (0.003-0.006 wt%) .

The term "microbiologically stable product" as used herein refers to a product that can be stored for at least 20 days under refrigerated conditions without developing unacceptable growth of undesirable, notably pathogenic micro-organisms.

According to a particularly preferred embodiment of the invention, the viable micro-organism used to inoculate the pasteurised or sterilised pre-mix is a probiotic micro-organism. Likewise, the viable cells contained in the cultured product advantageously are cells of a probiotic micro-organism. The combined application of probiotic micro-organisms and ω-3 PUFA in the cultured edible product provides desirable health benefits to said product.

Preferably, the probiotic micro-organism employed in the present process is selected from the group consisting of *Bifidobacterium, Lactobacillus, Bacteroides, Streptococcus, Saccharomyces* and combinations thereof. More preferably, the probiotic micro-organism is selected from the group consisting of *Bifidobacterium, Lactobacillus* and combinations thereof. Even more preferably, the micro-organism is selected form the group consisting of *Bifidobacterium lactis, Bifidus essensis, Lactobacillus acidophilus, Lactobacillus casei, Lactobacillus paracasei, Lactobacillus rhamnosus* and combinations thereof.

The amount and type of starter culture that is used to inoculate the pre-mix can vary. Preferably, the fermentation is accompanied by a pH decrease of at 1.0 point. Typically, fermentation is allowed to proceed until the edible product has reached a pH 4.0 to 5.0, more preferably of 4.2 to 4.8.

Iron may be added before the fermentation process occurs. It was found that the addition of iron was acceptable in every step of the fermentation process and the steps before the fermentation.

In the present process, fermentation may continue after addition of the non-encapsulated oil to the fermented pre-mix. According to a preferred embodiment, the pasteurised or sterilised pre-mix is inoculated with viable micro-organisms and fermented until it contains at least 5 x10⁷/ml, more preferably at least 5.0 x 10⁸/ml, most preferably at least 5.0 x 10⁹/ml viable micro-organisms. Following fermentation, the fermented diary product is suitably packaged in a sealed container. According to a very preferred embodiment, the packaged product containing at least 5.0 x 10⁷/ml, more preferably at least 5.0 x 10⁸/ml, most preferably at least 5.0 x 10⁹/ml viable micro-organisms.

Typical examples of edible products that can advantageously be produced with the present process include drinks, spreads and desserts. Preferably, the edible product is a drink or a spread. Most preferably, the edible product is a drink.

In principle, any type of edible protein can be used in the preparation of the present edible product. Preferably, the protein employed is selected from the group consisting of milk protein, soy protein and combinations thereof. According to a preferred embodiment, the edible product contains at least 0.3 wt%, more preferably at least 1 wt% of protein. Typically, the amount of protein does not exceed 12 wt%.

A major advantage of the present process resides in the fact that the ω-3 PUFA containing oil need not be subjected to high temperatures during the preparation of the microbiologically stable edible product. Typically, in the present process the oil is not subjected to temperatures in excess of 50°C, preferably it is not subjected to temperatures in excess of 45°C, most preferably the oil is not exposed to temperatures in excess of 40°C.

According to a preferred embodiment, the pre-mix is prepared by combining a protein composition containing protein and water with an aqueous fruit composition containing fruit solids and the resulting cultured edible product contains 0.01-50 wt% fruit solids. The term "fruit solids" as used herein refers to the dry matter contained in any fruit material that is incorporated in the edible product.

The aforementioned protein composition preferably is selected from the group consisting of milk, soy milk, buttermilk, yogurt, quark, cream, whey and combinations thereof. It is noted that the terms milk, buttermilk, yogurt and quark encompass full-fat versions of these products as well as reduced fat or even fat-free versions. Furthermore, it is noted that, for instance, milk may be produced from by reconstituting milk powder with milk. The present invention also encompasses the use of the aforementioned protein compositions in reconstituted form. In the present process, the protein composition is advantageously incorporated in the final edible product in a concentration from 50 to 97.9 wt%, more preferably from 60 to 90 wt%, most preferably from 65 to 85 wt%. The advantages of the invention are particularly appreciated in case the protein composition is a dairy composition, especially a diary composition selected from the group consisting of milk, yogurt, whey and combinations thereof.

In accordance with a preferred embodiment of the present process, the protein composition contains a limited amount of milk fat. Typically, the protein composition contains less then 3 wt% of milk fat, preferably from 0.05-2 wt% of milk fat.

According to a preferred embodiment, the present process employs fruit solids that originate from one or more of the following fruit sources: citrus fruit (e.g. orange, tangarine, lemon or grapefruit); tropical fruit (e.g. banana, peach, mango, apricot or passion fruit); red fruit (e.g. strawberry, cherry, raspberry or blackberry), or any combination thereof.

According to a further preferred embodiment, fruits are used with a relatively high pectin content, such as citrus fruits. Advantageously, the fruit solids employed in the present process comprise at least 0.001%, more preferably ate least 0.1% of fruit pectin by weight of the edible product. Typically, the amount of fruit pectin does not exceed 3% by weight of the edible product.

The fruit solids can be incorporated in the present edible product in any suitable form, for example, as intact fruit, as fruit puree, as fruit juice, as comminuted fruit, as fruit chunks or as a blend of these fruit products. Preferably, fruit is added in fluid form e.g. as a juice or a puree having a viscosity expressed in Bostwick consistometer values of between 5 and 20 cm. at 20°C.

As mentioned herein before, the pre-mix is suitably prepared by combining a protein composition containing protein and water with an aqueous fruit composition containing fruit solids. Optionally, the aqueous fruit composition comprises gelling agents or thickeners in an amount sufficient to bring the viscosity of the fruit composition within the above mentioned preferred range. Examples of suitable viscosity enhancing agents are alginates, gelatine, xanthan, starch, agar, or pectin. Preferably the level of thickeners is from 0.01 to 3 wt% based on the weight of the aqueous fruit composition. Most preferably, the aqueous fruit composition contains from 0.01 to 3 wt% of pectin. The pectin in the fruit composition may originate from the fruit solids contained therein or it may have been incorporated separately.

Preferably, if an aqueous fruit composition is employed in the present process, said fruit composition contains not more than trace amounts of dissolved iron and copper ions. Preferably the amount of dissolved copper ions in the fruit composition does not exceed 2 mg/kg, more preferably it does not exceed 0.25 mg/kg. Likewise the amount of dissolved iron ions preferably does not exceed 10 mg/kg, more preferably it does not exceed 2.5 mg/kg. By ensuring that the levels of dissolved copper and/or iron ions contained in the aqueous fruit composition are low, oxidation of the ω-3 PUFA, especially during pasteurisation or sterilisation, is prevented effectively. The amount of dissolved metal ions in the aqueous fruit composition may advantageously be reduced through incorporation of a suitable complexing agent, e.g. EDTA.

The amount of fruit used in the present process preferably is within the range 1-10%, more preferably within the range of 4-8% and most preferably within the range of 2-5%, by weight of the edible product. The aforementioned percentages refer to the equivalent amount of fruit that is incorporated in non-diluted, non-concentrated form. Thus, if 0.5 wt% of a 10-fold fruit concentrate is used, the amount of fruit incorporated is 5 wt%.

Unexpectedly, it was found that whereas pasteurisation or sterilisation of a pre-mix containing added ω-3 PUFA resulted in the immediate development of a pronounced fishy off-flavour, pasteurisation or sterilisation of a blend of ω-3 PUFA and the aqueous fruit composition did not produce significant off-flavour. Furthermore, off-flavour formation can be avoided by pre-mixing the ω-3 PUFA with a previously pasteurised or sterilised aqueous fruit composition. Thus, in accordance with a preferred embodiment, the present process comprises the step of forming a blend of ω-3 PUFA and fruit solids by (i) combining the oil containing ω-3 PUFA with a pasteurised or sterilised aqueous fruit composition or (ii) combining the oil with an aqueous fruit composition, followed by pasteurisation or sterilisation, followed by addition of the blend to the pasteurised or sterilised pre-mix, or to the fermented pre-mix. According to a particularly preferred embodiment, the aforementioned blend of ω-3 PUFA and fruit solids is added to the fermented pre-mix as this was found to be the most effective route for minimising off-flavour development.

The non-encapsulated oil employed in the present process advantageously comprises at least 0.01%, preferably at least 0.05% by weight of the edible product of an ω-3 oil selected from the group consisting of fish oil, algae oil, linseed oil, soybean oil, rapeseed oil and combinations thereof. These ω-3 oils contain appreciable levels of α-linolenic acid (ALA), eicosapentaenoic acid (EPA) and/or docosahexaenoic acid (DHA). In the scientific literature many health benefits have been attributed to the latter ω-3 polyunsaturated fatty acids.

According to a particularly preferred embodiment, at least 2%, preferably at least 5%, more preferably at least 10% and most preferably at least 20% of polyunsaturated acids selected from the group consisting of α-linolenic acid, eicosapentaenoic acid (EPA), docosahexaenoic acid (DHA) and combinations thereof are incorporated into the edible product by weight of the total amount of fatty acids contained in the non-encapsulated oil. EPA and DHA are particularly sensitive to oxidation and produce pronounced fishy off-flavours. Hence, in a particularly advantageous embodiment, at least 2%, preferably at least 5%, more preferably at least 10% and most preferably at least 20% of polyunsaturated acids selected from the group consisting of EPA, DHA and combinations thereof are incorporated into the edible product by weight of the total amount of fatty acids contained in the non-encapsulated oil. The total amount of fatty acids includes fatty acid residues as well as free fatty acids.

In a particularly advantageous embodiment, the present process comprises the incorporation of non-encapsulated oil at a level of 0.05-15 wt%, preferably 0.05-5 wt%, more preferably 0.1-2%, still more preferably from 0.2-1.5% and most preferably from 0.3-1% by weight of the final edible product. Omega-3 PUFA can suitably be obtained, for example, from salmon, tuna, mackerel, cod liver, algae, linseed, rapeseed and soybean.

In a further preferred embodiment, the present process employs ingredients that deliver not more than a limited amount of milk fat into the edible product. Accordingly, the edible product advantageously comprises less than 5 wt%, more preferably less than 2 wt% of milk fat.

In the present process the edible product may be supplemented with various optional ingredients, for example flavouring ingredients, antioxidants, thickeners, emulsifiers, salt, colouring agents, added proteins etc. Also possible is the addition of further beneficial agents such as fibres, (phyto)sterols and stanols, peptides, fortificants such as vitamins and minerals (e.g. iron and zinc) and probiotics or combinations thereof. The levels of these ingredients may vary in a broad range for example for each of these ingredients up to 15 wt%.

In accordance with the invention, pasteurisation is preferably carried out at a temperature of above 60°C, preferably 65-100°C, more preferably 70-80°C, most preferably 75-80°C. Preferably the duration of the pasteurisation heat treatment is from 1 second to 10 minutes, for example from 1 to 6 minutes.

Homogenisation of the pre-mix can be applied while the product is at elevated temperature. Preferably homogenisation takes place in a homogeniser operating at, for example, a pressure of at least 20 bar, preferably 30-500 bar, particularly 40-300 bar. If the pre-mix is fermented, homogenisation preferably (also) takes place after fermentation.

The edible product obtained from the present process is usually hot or cold filled into moulds or packages, allowed to cool down and stored at chill temperatures.

The invention is further illustrated by means of the following examples.

### EXAMPLES

### Example 1

A yogurt drink was made of the following composition:

| Ingredient | Parts by weight |
|---|---|
| Skimmed milk | 76 |
| Skimmed milk powder | 0.3 |
| Sucrose | 5 |
| Water | 13.37 |
| Yoghurt cultures *Lactobacillus sp.* and *Streptococcus sp.* | 0.01 |
| Fruit puree | 5 |
| Fish oil | 0.3 |
| Ferric pyrophosphate | 0.02 |

The method of preparation was as follows: the milk and water were mixed at 300 rpm to form a first pre-mix and heated to 60 °C. The sugar, skimmed milk powder and ferric pyrophosphate were added followed by further mixing at 3000 rpm. The resulting pre-mix was kept at 75 °C for 5 minutes. Then the mix was homogenised at 200bar.

A second pre-mix of the fruit puree and the oil was made by mixing these ingredients at ambient temperature followed by pasteurisation at 75 °C for 5 minutes.

The first pre-mix was inoculated with the above mentioned yoghurt cultures, mixed under low speed and fermented for approximately 4 hours at 43 °C to obtain a pH of 4.3. The fermented product was homogenised at 50 bar.

Next, the second pasteurized pre-mix was added to the fermented product to form the final product. The product was then filled and sealed in sterile glass jars.

The glass jars were stored for 4 weeks at 5 °C and subsequently opened and tasted. No perceivable fish taste or fish smell was observed.

### Comparative Example A

A yogurt drink was made using the same formulation as in Example 1.

The method of preparation was as follows: the milk and water were mixed at 300 rpm to form a first pre-mix and heated to 60 °C. The sugar and skimmed milk powder were added followed by further mixing at 3000 rpm. The resulting pre-mix was kept at 75 °C for 5 minutes. Then the mix was homogenised at 200bar.

A second pre-mix of the fruit puree, the oil and the ferric pyrophosphate was made by mixing these ingredients at ambient temperature followed by pasteurisation at 75 °C for 5 minutes.

The first pre-mix was inoculated with the above mentioned yoghurt cultures, mixed under low speed and fermented for approximately 4 hours at 43 °C to obtain a pH of 4.3. The fermented product was homogenised at 50 bar.

Next, the second pasteurized pre-mix was added to the fermented product to form the final product. The product was then filled and sealed in sterile glass jars.

The glass jars were stored at 5 °C and subsequently opened and tasted. A fish taste or fish smell was observed after 7-21 days.

## Claims

1. A process for the preparation of a cultured edible product comprising:
(a) from 0.1 to 12 wt% of protein;
(b) from 0.05 to 30 wt% of non-encapsulated oil containing at least 0.01 % of ω-polyunsaturated fatty acids by weight of the edible product;
(c) at least 60 wt% of water; and
(d) at least 10⁷ viable cells/ml of a micro-organism selected from the group consisting of *Bifidobacterium, Lactobacillus, Bacteroides, Streptococcus, Saccharomyces* and combinations thereof;
(e) from 0.001 wt% to 0.025 wt% of iron
said process comprising:
(1) providing a pre-mix containing the protein, the water and optionally further ingredients;
(2) pasteurising or sterilising the pre-mix;
(3) inoculating the pasteurised or sterilised pre-mix with a micro-organism selected from the group consisting of *Bifidobacterium, Lactobacillus, Bacteroides, Streptococcus, Saccharomyces* and combinations thereof to produce a fermented pre-mix;
(4) addition of iron in or after step (1), (2) or (3);
(5) combining the non-encapsulated oil and the fermented pre-mix to produce an oil-containing emulsion;
(6) homogenising the oil-containing emulsion to produce an oil-in-water emulsion containing a finely dispersed oil phase; and
(7) packaging the homogenised emulsion.

2. Process according to claim 1 wherein the iron is selected from the group consisting of iron pyrophosphate, iron orthophosphate, iron fumarate, iron EDTA, iron sulphate, iron glycinate, iron sorbate.

3. Process according to claim 1 or 2, wherein the oil is not subjected to temperatures in excess of 50°C.

4. Process according to any of the preceding claims, wherein the protein is selected from the group consisting of milk protein, soy protein and combinations thereof.

5. Process according to any one of the preceding claims, wherein the pre-mix is prepared by combining a protein composition containing protein and water with an aqueous composition containing fruit solids and wherein the cultured edible product contains 0.01-50 wt% fruit solids.

6. Process according to claim 5, wherein the fruit solids comprise at least 0.001% of fruit pectin by weight of the edible product.

7. Process according to claim 5 or 6, wherein the protein composition is selected from the group consisting of milk, soy milk, buttermilk, yogurt, quark, whey, cream and combinations thereof.

8. Process according to any one of claims 5-7, wherein the protein composition contains less then 2 wt% of milk fat.

9. Process according to any one of the preceding claims, wherein the pre-mix is inoculated with a probiotic micro-organism, preferably a probiotic micro-organism selected from the group consisting of *Bifidobacterium, Lactobacillus* and combinations thereof.

10. Process according to any one of the preceding claims, wherein the non-encapsulated oil comprises at least 0.01% by weight of the edible product of an ω-3 oil selected from the group consisting of fish oil, algae oil, linseed oil, soybean oil, rapeseed oil and combinations thereof.

11. Process according to any one of the preceding claims, wherein the edible product comprises less than 5 wt% of milk fat.

12. Process according to any one of the preceding claims, wherein the pre-mix is pasteurised.

13. Process according to any one of the preceding claims, wherein the pasteurised or sterilised pre-mix is inoculated with viable probiotic micro-organisms and fermented until it contains at least 5.0 x 10⁷/ml viable probiotic micro-organisms.

14. Process according to claim 13, wherein the packaged product contains at least 5.0 x 10⁷/ml viable probiotic micro-organisms.

## Patentansprüche

1. Verfahren zur Herstellung eines kultivierten essbaren Produkts, umfassend:
(a) 0,1 bis 12 Gewichts-% Protein;
(b) 0,05 bis 30 Gewichts-% eines nicht eingekapselten Öls, das wenigstens 0,01 ω3-mehrfach ungesättigte Fettsäuren, bezogen auf das Gewicht des essbaren Produkts, enthält;
(c) wenigstens 60 Gewichts-% Wasser und
(d) wenigstens 10⁷ lebensfähige Zellen/ml eines Mikroorganismus, ausgewählt aus der Gruppe, bestehend aus *Bifidobacterium, Lactobacillus, Bacteroides, Streptococcus, Saccharomyces* und Kombinationen davon;
(e) 0,001 Gewichts-% bis 0,025 Gewichts-% Eisen,
wobei das Verfahren umfasst:
(1) Bereitstellen einer Vormischung, die das Protein, das Wasser und gegebenenfalls weitere Ingredienzien enthält;
(2) Pasteurisieren oder Sterilisieren der Vormischung;
(3) Beimpfen der pasteurisierten oder sterilisierten Vormischung mit einem Mikroorganismus, ausgewählt aus der Gruppe, bestehend aus *Bifidobacterium, Lactobacillus, Bacteroides, Streptococcus, Saccharomyces* und Kombinationen davon, um eine fermentierte Vormischung zu produzieren;
(4) Zusatz von Eisen in oder nach Schritt (1), (2) oder (3);
(5) Kombinieren des nicht eingekapselten Öls und der fermentierten Vormischung unter Herstellung einer Öl enthaltenden Emulsion;
(6) Homogenisieren der Öl enthaltenden Emulsion unter Herstellung einer Ölin-Wasser-Emulsion, die eine fein erteilte Ölphase enthält, und
(7) Abpacken der homogenisierten Emulsion.

2. Verfahren nach Anspruch 1, wobei das Eisen ausgewählt wird aus der Gruppe, bestehend aus Eisenpyrophosphat, Eisenorthophosphat, Eisenfumarat, Eisen-EDTA, Eisensulfat, Eisenglycinat, Eisensorbat.

3. Verfahren nach Anspruch 1 oder 2, wobei das Öl keinen Temperaturen über 50 °C ausgesetzt wird.

4. Verfahren nach einem der vorangehenden Ansprüche, wobei das Protein ausgewählt ist aus der Gruppe, bestehend aus Milchprotein, Sojaprotein und Kombinationen davon.

5. Verfahren nach einem der vorangehenden Ansprüche, wobei die Vormischung hergestellt wird, indem eine Proteinzusammensetzung, die Protein und Wasser enthält, mit einer wässrigen Zusammensetzung, die Fruchtfeststoffe enthält, kombiniert wird, und wobei das kultivierte essbare Produkt 0,01 bis 50 Gewichts-% Fruchtfeststoffe enthält.

6. Verfahren nach Anspruch 5, wobei die Fruchtfeststoffe wenigstens 0,001 % Fruchtpektin, bezogen auf das Gewicht des essbaren Produkts, umfassen.

7. Verfahren nach Anspruch 5 oder 6, wobei die Proteinzusammensetzung ausgewählt wird aus der Gruppe, bestehend aus Milch, Sojamilch, Buttermilch, Jogurt, Quarz, Molke, Sahne und Kombinationen davon.

8. Verfahren nach einem der Ansprüche 5 bis 7, wobei die Proteinzusammensetzung weniger als 2 Gewichts-% Milchfett enthält.

9. Verfahren nach einem der vorangehenden Ansprüche, wobei die Vormischung mit einem probiotischen Mikroorganismus, vorzugsweise einem probiotischen Mikroorganismus, ausgewählt aus der Gruppe, bestehend aus *Bifidobacterium, Lactobacillus* und Kombinationen davon, beimpft wird.

10. Verfahren nach einem der vorangehenden Ansprüche, wobei das nicht eingekapselte Öl wenigstens 0,01 %, bezogen auf das Gewicht des essbaren Produkts, eines w-3-Öls umfasst, das ausgewählt wird aus der Gruppe, bestehend aus Fischöl, Algenöl, Leinsamenöl, Sojabohnenöl, Rapssamenöl und Kombinationen davon.

11. Verfahren nach einem der vorangehenden Ansprüche, wobei das essbare Produkt weniger als 5 Gewichts-% Milchfett umfasst.

12. Verfahren nach einem der vorangehenden Ansprüche, wobei die Vormischung pasteurisiert wird.

13. Verfahren nach einem der vorangehenden Ansprüche, wobei die pasteurisierte oder sterilisierte Vormischung mit lebensfähige probiotischen Mikroorganismen beimpft wird und fermentiert wird, bis sie wenigstens 5,0 × 10⁷/ml lebensfähige probiotische Mikroorganismen enthält.

14. Verfahren nach Anspruch 13, wobei das abgepackte Produkt wenigstens 50 × 10⁷/ml lebensfähige probiotische Mikroorganismen enthält.

## Revendications

1. Procédé de préparation d'un produit comestible cultivé comprenant :
(a) de 0,1 à 12 % en poids de protéine ;
(b) de 0,05 à 30 % en poids d'huile non encapsulée contenant au moins 0,01 % d'acides gras oméga 3 poly-insaturés en poids du produit comestible ;
(c) au moins 60 % en poids d'eau ; et
(d) au moins 10⁷ cellules viables/ml d'un microorganisme choisi dans le groupe comprenant *Bifidobacterium, Lactobacillus, Bacteroides,* Streptococcus, *Saccharomyces* et leurs combinaisons ;
(e) de 0,001 % en poids à 0,025 % en poids de fer, ledit procédé comprenant :
(1) la mise à disposition d'un prémélange contenant la protéine, de l'eau et éventuellement d'autres ingrédients ;
(2) la pasteurisation ou la stérilisation du prémélange ;
(3) l'inoculation dans le prémélange pasteurisé ou stérilisé, d'un microorganisme choisi dans le groupe comprenant *Bifidobacterium,* Lactobacillus, *Bacteroides, Streptococcus, Saccharomyces* et leurs combinaisons pour produire un prémélange fermenté ;
(4) l'addition de fer à ou après l'étape (1), (2), ou (3) ;
(5) la combinaison de l'huile non encapsulée et du prémélange fermenté pour produire une émulsion contenant de l'huile ;
(6) l'homogénéisation de l'émulsion contenant de l'huile pour produire une émulsion huile dans eau contenant une phase huileuse finement dispersée ; et
(7) le conditionnement de l'émulsion homogénéisée.

2. Procédé selon la revendication 1, dans laquelle le fer est choisi dans le groupe comprenant du pyrophosphate de fer, de l'orthophosphate de fer, du fumarate de fer, de l'EDTA de fer, du sulfate de fer, du glycinate de fer, du sorbate de fer.

3. Procédé selon la revendication 1 ou 2, dans lequel l'huile n'est pas soumise à des températures dépassant 50°C.

4. Procédé selon l'une quelconque des revendications précédentes, dans lequel la protéine est choisie dans le groupe comprenant une protéine de lait, une protéine de soja et leurs combinaisons.

5. Procédé selon l'une quelconque des revendications précédentes, dans lequel le prémélange est préparé en combinant une composition protéique contenant une protéine et de l'eau avec une composition aqueuse contenant des éléments solides de fruit et dans lequel le produit comestible cultivé contient 0,01 à 50 % en poids d'éléments solides de fruit.

6. Procédé selon la revendication 5, dans lequel les éléments solides de fruit comprennent au moins 0,001 % de pectine de fruit en poids du produit comestible.

7. Procédé selon la revendication 5 ou 6, dans lequel la composition protéique est choisie dans le groupe comprenant le lait, le lait de soja, le petit-lait, le yaourt, le fromage blanc, le lactosérum, la crème et leurs combinaisons.

8. Procédé selon l'une quelconque des revendications 5 à 7, dans lequel la composition protéique contient moins de 2 % en poids de matières grasses de lait.

9. Procédé selon l'une quelconque des revendications précédentes, dans lequel on inocule dans le prémélange, un microorganisme probiotique, de préférence, un microorganisme probiotique choisi dans le groupe comprenant *Bifidobacterium, Lactobacillus* et leurs combinaisons.

10. Procédé selon l'une quelconque des revendications précédentes, dans lequel l'huile non encapsulée comprend au moins 0,01 % en poids du produit comestible d'une huile à oméga 3 choisie dans le groupe comprenant l'huile de poisson, l'huile d'algues, l'huile de lin, l'huile de soja, l'huile de colza et leurs combinaisons.

11. Procédé selon l'une quelconque des revendications précédentes, le produit comestible comprenant moins de 5 % en poids de matières grasses du lait.

12. Procédé selon l'une quelconque des revendications précédentes, dans lequel le prémélange est pasteurisé.

13. Procédé selon l'une quelconque des revendications précédentes, dans lequel on inocule dans le prémélange pasteurisé ou stérilisé, des microorganismes probiotiques viables et le prémélange est fermenté jusqu'à ce qu'il contienne au moins 5,0 x 10⁷/ml microorganismes probiotiques viables.

14. Procédé selon la revendication 13, dans lequel le produit conditionné contient au moins 5,0 x 10⁷/ml microorganismes probiotiques viables.
